# EUROPEAN PATENT SPECIFICATION

(11) **EP 4 342 777 B1**
(45) Date of publication and mention of the grant of the patent: **20.08.2025**
(21) Application number: 23198881.7
(22) Date of filing: 21.09.2023
(51) Int. Cl.: B62K 5/10, B62K 5/027, B62K 5/06

(54) **SWINGING ARM SUSPENSION**
SCHWINGARMAUFHÄNGUNG
SUSPENSION À BRAS OSCILLANT

(30) Priority: 22.09.2022 IT 202200019410
(43) Date of publication of application: 27.03.2024
(73) Proprietor: ASKOLL EVA S.P.A., 36031 Dueville (VI) (IT)
(72) Inventor: CICERO, Claudio, 36100 Vicenza (IT); MARIONI, Elio, I-36031 Dueville (VI) (IT)
(74) Representative: Botti & Ferrari S.p.A.

(56) References cited:
- EP-A1- 1 070 658
- JP-A- S60 183 280
- KR-A- 20140 078 226

## Description

The present invention refers to a swinging arm suspension adapted to maintain in vertical an articulated three-wheeled motorcycle, that is, comprising a front portion and a rear portion joined together by said suspension and without a stand, by means of linkages and elastic elements, combined with each other, in an autonomous way. The invention also refers to a motorcycle which uses said swinging arm suspension.

In the present description, the terms "vehicle" and "motorcycle" are used in an equivalent manner.

As known, a two-wheeled vehicle, when the vehicle is stationary and without the driver, must necessarily have at least one support system normally called "stand" so as not to fall on the ground. The ground support systems are of the central type (which maintain the vehicle in an orthogonal position with respect to the support plane, but need a certain "effort" by the driver to operate) or of the lateral type, (which is simpler to operate, but place the vehicle in an inclined position with respect to the support plane). Both the systems are present in some vehicles. The weight of the vehicle influences said operation and the same becomes "tiring" when it is often repeated for an intensive use of the vehicle, for example for deliveries of various materials with various stops in limited journeys. Documents EP1070658A1, KR20140078226A and JPS60183280A show devices according to the prior art. In particular, EP1070658A1 discloses a three-wheeled motorcycle according to the preamble of claim 1.

In order to overcome all this, a three-wheeled vehicle can be used which, if of the rigid type, remains vertical on its own like the tricycles, such as the toy tricycles for children. However, this simplification does not fit well for a fluid guide, since, during a curve, the centrifugal force which affects the vehicle made in this way tends to move the center of gravity of the same vehicle to the outside, thus risking an overturning, especially at high speed. This is all due to the fact that the driver cannot counteract said force by shifting his weight towards the inside of the curve, as he normally does with a two-wheeled vehicle.

In order to overcome said drawback, three-wheeled vehicles were created which consist of a front portion and a rear portion, which allow, through known mechanisms, to laterally incline the front portion in order to counteract the effects of the above-described centrifugal force. However, these solutions still have the problem of the vertical parking, since, when the front portion is free to rotate, it is necessary to provide mechanisms which are able to keep it in a vertical position when the driver is not performing a curve, otherwise the vehicle would be undriveable. The adoption of mechanisms adapted to connect the front part of a vehicle with the rear portion is known in the art, which mechanisms operate for this purpose under both mechanical and electromechanical and still electromagnetic command, all being however complex mechanisms requiring the installation on the vehicle of auxiliary devices which are necessary for their operation, all this increasing the overall weight and costs of the vehicle.

The purpose of the present invention is to provide a swinging arm suspension which is adapted to mechanically connect a front portion of a three-wheeled motorcycle to the rear portion thereof and allows to maintain the three-wheeled motorcycle in a vertical position only with the aid of elastic elements and mechanical linkages which, if combined with each other, form, as a whole, a swinging mechanical joint, which is adapted to counteract the lateral inclination tendency of the vehicle, so as to vertically support it when stationary.

The attachment points of the elastic elements and the stiffness thereof can modify the force counteracting the lateral inclination tendency of the vehicle due to the force of gravity. Last but not least, this mechanism allows the vehicle to completely emulate a two-wheeled vehicle, in particular in performing the curves, since, together with the geometry of the joint, also said suspension, which takes the form of an articulated quadrilateral, manages to ensure that, when it modifies its vertical inclination, it always rotates with respect to a geometric constant point corresponding to the lateral rotation center of said tire.

A further purpose of the present invention is to provide a joint or a suspension of the above-described type which is combined with a mechanism which allows the front portion of the vehicle to rotate with respect to the rear portion around an axis which is orthogonal to the development direction of the vehicle, allowing to better deal with bumpy routes, thanks to the bending of the vehicle following the stresses due to holes or bumps.

The present invention will now be illustrated and described in detail, with reference to a particular embodiment thereof, given by way of nonlimiting example, with the aid of the attached drawing tables, wherein:
- Figs. 1A and 1B illustrate a motorcycle provided with a suspension according to the invention in two different configurations: the first in a configuration in which the motorcycle has its own front portion and the rear portion aligned to each other and the second in which the front portion is rotated with respect to the rear portion;
- Figs. 2A and 2B illustrate a motorcycle provided with a suspension according to the invention, which is combined with a linkage in order to allow the front portion to move in height with respect to the rear portion, according to a first embodiment;
- Figs. 3A and 3B illustrate two schematical views for illustrative purposes, which describe the operating geometry of a suspension according to the invention;
- Fig. 4 illustrates an enlarged view of the suspension of Figs. 2A and 2B.
- Figs. 5A and 5B respectively illustrate a lateral and a perspective view of a second embodiment of a suspension according to the invention.

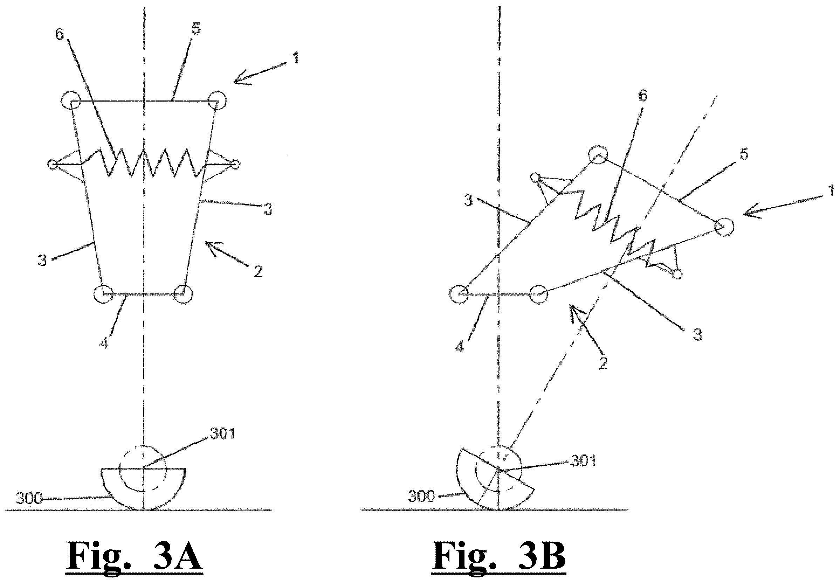

As known, other solutions with central joints between front part and rear part of the vehicle actually allow the rotation of the front part with respect to the rear part, but with a drift of the same front wheel with respect to the longitudinal plane of symmetry of the vehicle. Essentially, with the joints known in the art, the rotation of the front portion with respect to the rear portion takes place around an axis which does not coincide with the ideal axis of rotation, which would be the axis around which the front tire would be able to rotate if the vehicle has only two wheels. In order to identify this axis, it is necessary to consider the section of the tire which touches the ground, which therefore has the form of a circle arc, indicated in Figs. 3A and 3B with the reference 300; the center of this circle arc is the lateral rotation center 301 of the tire and the ideal rotational axis traverses this lateral rotation center and runs parallel to the ground in the longitudinal direction of the vehicle.

Obviously, the above-mentioned description is intended for explanatory purposes and must not be intended in a limiting sense with respect to the particular geometric configurations of the joint.

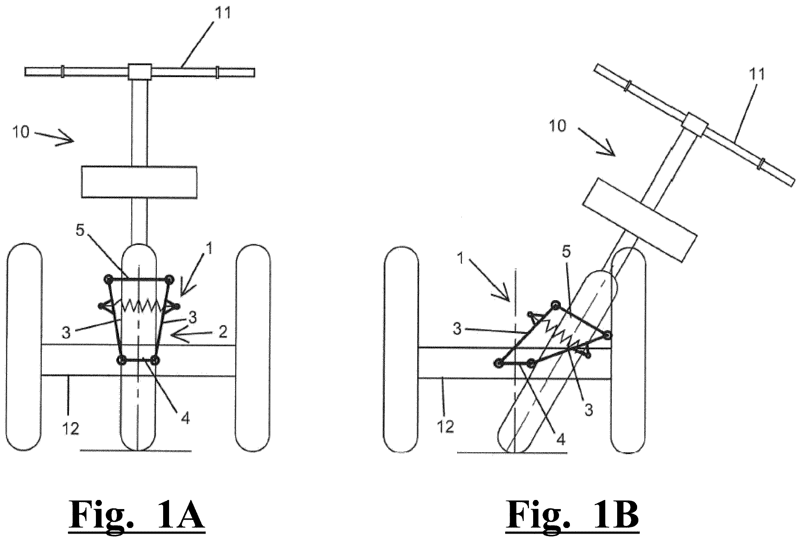

A swinging arm suspension 1 according to the invention is illustrated in Figs. 1A and 1B. It is adapted to mechanically connect a front portion 11 of a three-wheeled motorcycle 10 to the rear portion 12 thereof and comprises an articulated quadrilateral 2, in turn comprising a pair of first lateral connecting rods 3 with the same length, a lower base segment 4 and a major base segment 5, wherein the length of the lower base segment 4 is shorter than the length of the major base segment 5; at least one elastic element 6 acts on said first lateral connecting rods 3, which elastic element is adapted to maintain, when at rest, the articulated quadrilateral 2 in a configuration in which said base segments 4, 5 are parallel to each other (Fig. 1A).

In order to ensure that the front tire of the vehicle can rotate around the lateral rotation center described above and accordingly also around the ideal axis of rotation, it is provided that the geometric lengths of said first lateral connecting rods 3 and of said major 5 and lower 4 base segments are proportionate to each other such that the axis of symmetry of the major base segment 5, for any position of said major base segment 5 with respect to the lower base segment 4, always traverses the lateral rotation center 301.

Obviously, this means that, operatively, the sizes of the various elements of the articulated quadrilateral 2 must be set so as to reach the desired purpose. This also depends on the height from the ground at which the suspension will be installed on the motorcycle (see Figs. 3A and 3B).

In order to obtain this result, the joints of the known type should be placed at few cm from the ground, and this would not allow the use of the motorcycle on the road, due to the closeness of the mechanism to the ground. This is due to the fact that, in the suspension according to the invention, the rotation center is offset to the outside of the articulated quadrilateral 2, while, in the known joints, it is geometrically comprised in the structure of the joint. Suffice it to consider joints which are simply consisting of a rotational coupling, wherein the rotation center coincides with the center of the rotational coupling.

The counteracting force of the first elastic element 6 is such as to allow to support the vehicle in a vertical position when it is stationary and to be able to incline it when it moves forward and performs the curves.

The presence of the first elastic element 6 ensures that, whenever the two bases 4, 5 are not parallel, the elastic force accumulating in said element due to the effect of its deformation pushes the articulated quadrilateral 2 so as to bring it back in the configuration in which the two bases 4, 5 are parallel.

Advantageously, the first elastic element 6 can be placed between the two first connecting rods 3.

In an alternative solution, a pair of elastic elements 6 can be used, each being integral with the frame of the vehicle 10 by means of a first end thereof and with one of the first two connecting rods 3 by means of the further end thereof.

The first elastic element 6 can consist, for example, of a wire, air, hydraulic, gas spring or similar.

The major 5 and lower 4 base segments can also advantageously be part of the frame of the front portion 11 and of the rear portion 12, respectively.

The term "articulated quadrilateral" indicates a quadrilateral in which the sides are connected to each other by rotating pairs, for example bearings or bushings, which allow the swinging thereof.

Advantageously, it can provide that both the first connecting rods 3 are mounted at an end thereof on a support anchored to the rear portion 12 of the vehicle 10 through said rotating pairs, on which the same can freely move in a swinging manner, on the other side on a support anchored to the front portion, always through rotating pairs.

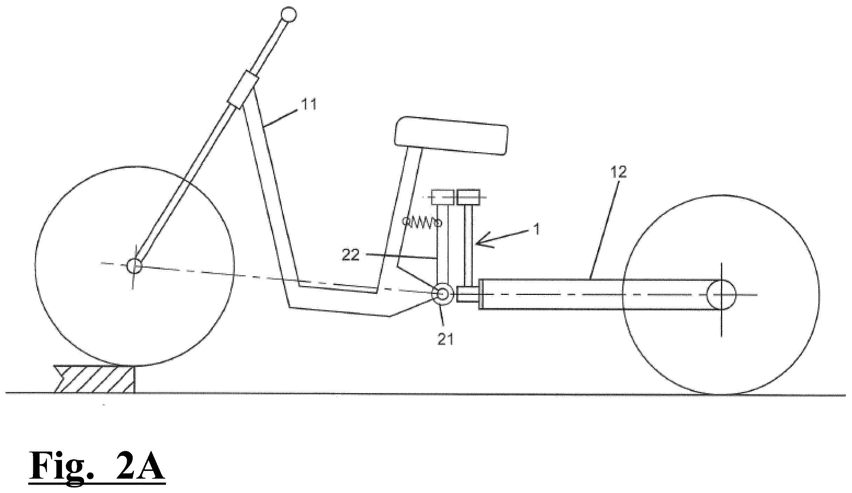

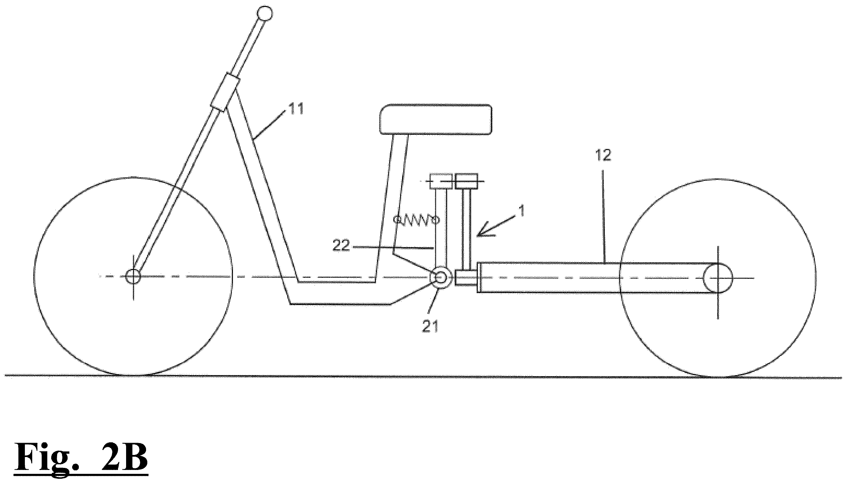

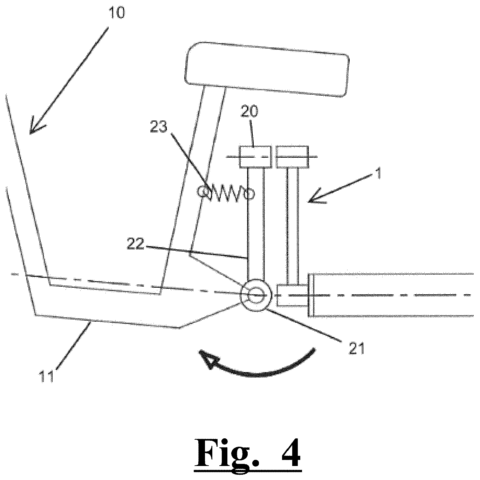

In order to increase the comfort of the driver, a suspension according to the invention can be combined with a swinging linkage 20, described below with reference to a first embodiment illustrated in Figs. 2A, 2B and 4.

The swinging linkage 20, according to a first embodiment, comprises a hinge 21 which connects the front portion 11 of a vehicle 10 to a joint element 22 with which the major base segment 5 of a swinging arm suspension 1 according to the invention is integral. The freedom of rotation of the hinge 21 is adjusted by at least one second elastic element 23. Advantageously, it can be placed between the joint element 22 and the frame of the front portion 11.

In a further alternative embodiment, the second elastic element 23 can be coaxial to the hinge 21.

With this solution, the two portion of a vehicle 10 are free to rotate with respect to each other around an axis which is substantially orthogonal to the longitudinal development direction of said vehicle, thus allowing to easily deal with rough roads with holes and bumps.

Fig. 2A shows how, in the presence of a bump, the axis which joins the center of the front wheel to the hinge 21 is not aligned with the axis which joins the hinge 21 with the center of the rear wheel, while, in Fig. 2B, in the absence of a bump, said axes are aligned.

The described system therefore allows the front portion 11, as a whole, to move at the same time, both laterally inclining with respect to the rear portion, and introflecting with respect to the same, thus generating, through hinge and elastic means, the longitudinal swinging which is adapted to absorb the roughness of the ground during the travel.

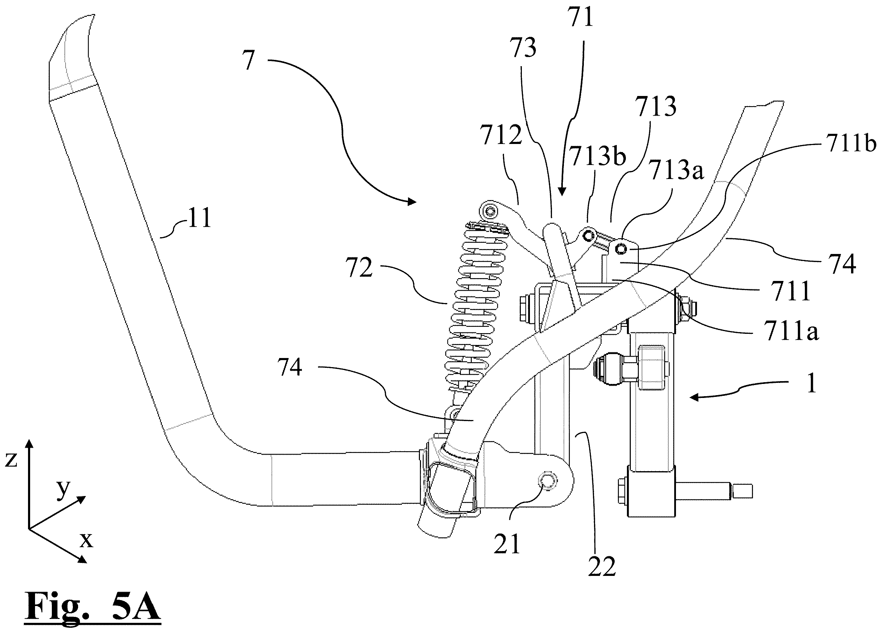

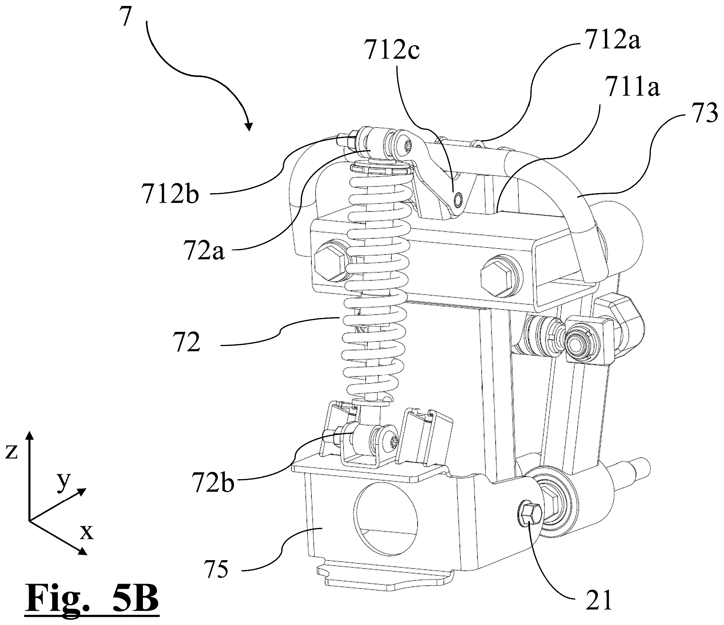

The swinging arm suspension 1, in a second embodiment shown in Fig. 5A and 5B, can comprise a shock absorbing device 7.

Said shock absorbing device 7 replaces said second elastic element 23 of the previous embodiment and acts as an elastic damper between the front portion 11 and the joint element 22, which are constrained by the hinge 21.

It is observed that the further components of the device previously described, particularly the hinge 21, remain substantially unchanged; the same numerical reference previously given is attributed to them in the following description.

Specifically, the shock absorbing device 7 takes the form of a deflecting mechanism 71, hinged in two points which are solidly attached respectively to the front portion 11 of the vehicle and to the joint element 22, and in a shock absorber cylinder 72 which connects the free end of the deflecting mechanism 71 to a portion of the vehicle's frame, in particular to the front portion 11.

It is observed that, thanks to the interposition of the deflecting mechanism 71, the shock absorber cylinder 72 is oriented in a direction that has a vertical component which is prevalent with respect to the horizontal one, unlike what happens with said second elastic element 23.

The deflecting mechanism 71 is connected to the joint element 22 by hinging to a support bracket 711. The joint element 22 remains solidly attached, as in the previous embodiment, to the major base segment 5 of the swinging arm suspension 1, which connects it to the rear portion 12 of the vehicle 10.

Said deflecting mechanism comprises a rocker arm 712 and a second connecting rod 713, which connects said support bracket 711 to the rocker arm 712.

The support bracket 711 comprises a base 711a which rises above the joint element 22 and an upper portion 711b to which the second connecting rod 713 is hinged.

The rocker arm 712 comprises a first end 712a hinged, with a first rotating pair, to the second connecting rod 713 and a second end 712b hinged, with a second rotating pair, to the shock absorber cylinder 72. The rocker arm 712 comprises an intermediate fulcrum 712c hinged to a fixed bar 73, which, as discussed below, is integral with the front portion 11 of the frame.

It is further observed that the rocker arm 712 comprises, in the depicted embodiment, a minor arm and a major arm inclined one with respect to the other and connected in the intermediate fulcrum 712c. The minor arm supports the first end 712a and the major arm supports the second end 712b. The relative inclination between the two arms is indicatively between 60° and 120°. The concavity defined between the two arms of the rocker arm 712 faces upwards.

The mentioned bar 73, that allows to hold in position the intermediate fulcrum 712c, is transversally arranged to connect two lateral spars 74 which engage in correspondence of a junction element 75, in particular a metal profile, which supports the hinge 21. The spars can support further structural elements of the vehicle 10, for example the driver's seat.

The rocker arm 712, as known, is suitable to continuously swing about the intermediate fulcrum 712c, raising and lowering in opposite directions the first and second ends.

As said, the second connecting rod 713 connects the support bracket 711 with the rocker arm 712 and comprises a first end 713a hinged, with a rotating pair, to the second end 711b of the support bracket 711 and a second end 713b hinged, with a rotating pair, to the first end of the rocker arm 712.

The second connecting rod 713 and the rocker arm 712 define, therefore, two subsequent links of a kinematic chain.

The shock absorber 72 comprises a first end 72a coupled through a rotating pair to the second end 712b and a second end 72b coupled through a kinematic pair to a support bracket solidly attached to the front portion 11 of the frame, in particular with the junction element 75 which also supports the hinge 21.

The shock absorber 72, as known, has an elastic resistance with damping with respect to compression, and therefore opposes the relative skewing of the front and rear portions caused by the roughness of the ground.

During normal operation, when the rear axle raises with respect to the front axle of the vehicle the second connecting rod 713, intermediate between the support bracket 711 and the rocker arm 712, rises to a raised position, farther from the ground, causing the lowering of the end 712b of the rocker arm 712, compressing the shock absorber 72. Vice versa, when the rear axle lowers with respect to the front axle of the vehicle, the second connecting rod 713 lowers to a position closer to the ground, causing the raising of the end 712b of the rocker arm 712, decompressing the shock absorber 72.

From the above, it can therefore be inferred that the invention described herein solves the problems known in the art by providing a constructively simple solution which allows to improve the drivability of a three-wheeled vehicle.

Specifically, the second embodiment allows, thanks to the vertical arrangement of the shock absorbing device 7, to minimize the axial size of the vehicle. This allows, while respecting the dimensional constraints of the vehicle design, to use a shock absorber cylinder of substantial length and commercially available as an elastic counter element, with consequent improvement in driving comfort and containment of construction costs.

Obviously, various modifications and variations of the present invention are possible in the light of the above. It must therefore be understood that, within the scope of the attached claims, the invention can be realized in a different way than as specifically described.

## Claims

1. THREE-WHEELED MOTORCYCLE (10), comprising a front portion (11) provided with a tire and a rear portion (12) provided with two tires, where said front and rear portions (11, 12) are connected to each other through a swinging arm suspension (1), said suspension comprising an articulated quadrilateral (2), in turn comprising a pair of first lateral connecting rods (3) with the same length, a lower base segment (4) and a major base segment (5), wherein the length of the lower base segment (4) is shorter than the length of the major base segment (5); at least one first elastic element (6) acting on said first lateral connecting rods (3), which elastic element is adapted to maintain, when at rest, the articulated quadrilateral (2) in a configuration in which said base segments (4, 5) are parallel to each other; wherein the geometric lengths of said first lateral connecting rods (3) and of said major (5) and lower (4) base segments are proportionate to each other so as to ensure that the axis of symmetry of the major base segment (5), for any position of said major base segment (5) with respect to the lower base segment (4), always traverses a constant geometric point coinciding with the lateral rotation center (301) of the tire of the front portion (11) of the motorcycle (10) with respect to which said tire is adapted to rotate, thus modifying its inclination due to the effect of the action of the driver in the moment in which he has to steer, said three-wheeled motorcycle (10) **being characterized in that** it comprises a hinge (21), which connects the front portion (11) of said motorcycle (10) to at least one joint element (22), with which the major base segment (5) of the swinging arm suspension (1) is solidly attached; wherein the freedom of rotation of said hinge (21) is adjusted by at least a second elastic element (23,72).

2. THREE-WHEELED MOTORCYCLE (10), according to claim 1, **characterized in that** said pair of first connecting rods (3) is adapted to be mounted at a first end thereof on a support anchored to the rear portion (12) of said three-wheeled motorcycle (10) through rotating pairs on which the same can freely move in a swinging manner and, at the further ends thereof, on a support anchored to the front portion (11), always through rotating pairs.

3. THREE-WHEELED MOTORCYCLE (10), according to any one of the previous claims, **characterized in that** said first elastic element (6) consists of a wire, air, hydraulic or gas spring.

4. THREE-WHEELED MOTORCYCLE (10), according to any one of the previous claims, **characterized in that** said swinging arm suspension (1) comprises a pair of said first elastic elements (6), each being adapted to connect the frame of said three-wheeled motorcycle (10) with one of the two first connecting rods (3).

5. THREE-WHEELED MOTORCYCLE (10), according to any one of the previous claims, **characterized in that** the second elastic element (23) is coaxial with the hinge (21).

6. THREE-WHEELED MOTORCYCLE (10), according to claim 5, **characterized in that** said second elastic element (23) connects said at least one joint element (22) to the frame of the front portion (11) of the three-wheeled motorcycle (10).

7. THREE-WHEELED MOTORCYCLE (10), according to any one of the claims 1 to 4, **characterized in that** said second elastic element (72) is connected to a deflecting mechanism (71) capable of allowing a desired orientation of said second elastic element (72).

8. THREE-WHEELED MOTORCYCLE (10), according to claim 7, where said deflecting mechanism (71) takes the form of a kinematic chain that connects a first end of said second elastic element (72) to one between the joint element (22) or the front portion (11) of the motorcycle (10); a second end of said second elastic element (72) being connected to the other between the joint element (22) or the front portion (11) of the motorcycle (10).

9. THREE-WHEELED MOTORCYCLE (10), according to claim 8, **characterized in that** said deflecting mechanism (71) comprises:
at least a rocker arm (712) comprising a first end (712a), a second end (712b) hinged to said second elastic element (72) and an intermediate fulcrum (712c) hinged to a hinge point solidly attached to the front portion (11) of the motorcycle (10);
a second connecting rod (713) comprising a first end (713a), hinged to an element solidly attached to said joint element (22) and a second end (713b), hinged to the first end (712a) of said rocker arm (712).

10. THREE-WHEELED MOTORCYCLE (10), according to claim 9, wherein said hinge point solidly attached to the front portion of the motorcycle takes the form of a fixed bar (73), said fixed bar (73) being supported by at least one vertical spar (74), capable of supporting further structural elements of the three-wheeled motorcycle (10).

11. THREE-WHEELED MOTORCYCLE (10), according to one of the claims from 7 to 10, wherein said second elastic element (72) takes the form of a shock absorber cylinder.

12. THREE-WHEELED MOTORCYCLE (10), according to one of the claims from 7 to 11, wherein said second elastic element (72) shows a prevalent development along a direction orthogonal to the ground.

13. THREE-WHEELED MOTORCYCLE (10), according to one of the claims from 7 to 12, comprising at least one junction element (75), integral with the front portion (11) of the motorcycle, hinged to said second end (72b) of said second elastic element (72) and which also supports said hinge (21).

## Patentansprüche

1. DREIRÄDRIGES MOTORRAD (10), mit einem Vorderteil (11), der mit einem Reifen versehen ist, und einem Hinterteil (12), der mit zwei Reifen versehen ist, wobei der Vorder- und der Hinterteil (11,12) über eine Schwingarmaufhängung (1) miteinander verbunden sind, wobei die Aufhängung ein Gelenkviereck (2) aufweist, das seinerseits ein Paar erster seitlicher Verbindungsstäbe (3) mit der gleichen Länge, ein unteres Basissegment (4) und ein Hauptbasissegment (5) aufweist, wobei die Länge des unteren Basissegments (4) kürzer als die Länge des Hauptbasissegments (5) ist; wobei mindestens ein erstes elastisches Element (6) auf die ersten seitlichen Verbindungsstäbe (3) einwirkt, wobei das erste elastische Element dafür geeignet ist, im Ruhezustand das Gelenkviereck (2) in einer Konfiguration zu halten, in der die Basissegmente (4,5) parallel zueinander sind; wobei die geometrischen Längen der ersten seitlichen Verbindungsstäbe (3) und des Hauptbasissegments (5) und des unteren Basissegments (4) proportional zueinander sind, um sicherzustellen, dass die Symmetrieachse des Hauptbasissegments (5) für jede Position des Hauptbasissegments (5) bezüglich des unteren Basissegments (4) immer durch einen konstanten geometrischen Punkt geht, der mit dem Seitwärtsrotationszentrum (301) des Reifens des Vorderteils (11) des Motorrads (10), bezüglich dem der Reifen sich drehen kann, zusammenfällt, wodurch seine Neigung infolge der Wirkung der Aktivität des Fahrers in dem Augenblick, in dem er steuern muss, geändert wird, wobei das dreirädrige Motorrad (10) **dadurch gekennzeichnet ist, dass** es ein Gelenk (21) aufweist, das den Vorderteil (11) des Motorrades (10) mit mindestens einem Verbindungselement (22) verbindet, mit dem das Hauptbasissegment (5) der Schwingarmaufhängung (1) fest verbunden ist; wobei die Drehbewegungsfreiheit des Gelenks (21) durch mindestens ein zweites elastisches Element (23, 72) eingestellt ist.

2. DREIRÄDRIGES MOTORRAD (10) nach Anspruch 1, **dadurch gekennzeichnet, dass** das Paar erster Verbindungsstäbe (3) geeignet ist, um an ihrem ersten Ende an einem Träger, der an dem Hinterteil (12) des dreirädrigen Motorrads (10) über Drehpaare befestigt ist, an denen sich dieselben schwingend frei bewegen können, und an ihren weiteren Enden an einem an dem Vorderteil (11) befestigten Träger immer über Drehpaare angebracht zu werden.

3. DREIRÄDRIGES MOTORRAD (10) nach einem der vorhergehenden Ansprüche, **dadurch gekennzeichnet, dass** das erste elastische Element (6) aus einer Draht-, Luft-, Hydraulik- oder Gasfeder besteht.

4. DREIRÄDRIGES MOTORRAD (10) nach einem der vorhergehenden Ansprüche, **dadurch gekennzeichnet, dass** die Schwingarmaufhängung (1) ein Paar der ersten elastischen Elemente (6) aufweist, von denen jedes geeignet ist, den Rahmen des dreirädrigen Motorrades (10) mit einem der beiden ersten Verbindungsstäbe (3) zu verbinden.

5. DREIRÄDRIGES MOTORRAD (10) nach einem der vorhergehenden Ansprüche, **dadurch gekennzeichnet, dass** das zweite elastische Element (23) koaxial zu dem Gelenk (21) ist.

6. DREIRÄDRIGES MOTORRAD (10) nach Anspruch 5, **dadurch gekennzeichnet, dass** das zweite elastische Element (23) das mindestens eine Verbindungselement (22) mit dem Rahmen des Vorderteils (11) des dreirädrigen Motorrads (10) verbindet.

7. DREIRÄDRIGES MOTORRAD (10) nach einem der Ansprüche 1 bis 4, **dadurch gekennzeichnet, dass** das zweite elastische Element (72) mit einem Umlenkmechanismus (71) verbunden ist, der eine gewünschte Ausrichtung des zweiten elastischen Elements (72) zulassen kann.

8. DREIRÄDRIGES MOTORRAD (10) nach Anspruch 7, bei dem der Umlenkmechanismus (71) in Form einer kinematischen Kette ausgebildet ist, die ein erstes Ende des zweiten elastischen Elements (72) mit einem, dem Verbindungselement (22) oder dem Vorderteil (11) des Motorrades (10) verbindet, wobei ein zweites Ende des zweiten elastischen Elements (72) mit dem jeweils anderen, dem Verbindungselement (22) oder dem Vorderteil (11) des Motorrades (10) verbunden ist.

9. DREIRÄDRIGES MOTORRAD (10) nach Anspruch 8, **dadurch gekennzeichnet, dass** der Umlenkmechanismus (71) mindestens einen Kipphebel (712) aufweist, der ein erstes Ende (712a), ein zweites Ende (712b), das mit dem zweiten elastischen Element (72) gelenkig verbunden ist, und einen Zwischendrehpunkt (712c) aufweist, der mit einem Gelenkpunkt gelenkig verbunden ist, der fest mit dem Vorderteil (11) des Motorrades (10) verbunden ist,
einen zweiten Verbindungsstab (713) aufweist, der ein erstes Ende (713a) aufweist, das mit einem fest mit dem Verbindungselement (22) verbundenen Element gelenkig verbunden ist, und ein zweites Ende (713b) aufweist, das mit dem ersten Ende (712a) des Kipphebels (712) gelenkig verbunden ist.

10. DREIRÄDRIGES MOTORRAD (10) nach Anspruch 9, bei dem der mit dem Vorderteil des Motorrades fest verbundene Gelenkpunkt in Form einer festen Stange (73) ausgebildet ist, wobei die feste Stange (73) von mindestens einem vertikalen Holm (74) gestützt ist, der weitere Strukturteile des dreirädrigen Motorrades (10) tragen kann.

11. DREIRÄDRIGES MOTORRAD (10) nach einem der Ansprüche 7 bis 10, bei dem das zweite elastische Element (72) in Form eines Stoßdämpferzylinders ausgebildet ist.

12. DREIRÄDRIGES MOTORRAD (10) nach einem der Ansprüche 7 bis 11, bei dem das zweite elastische Element (72) eine vorherrschende Erstreckung in einer zu dem Boden orthogonalen Richtung aufweist.

13. DREIRÄDRIGES MOTORRAD (10) nach einem der Ansprüche 7 bis 12, mit mindestens einem Verbindungselement (75), das mit dem Vorderteil (11) des Motorrades einstückig ist, mit dem zweiten Ende (72b) des zweiten elastischen Elements (72) gelenkig verbunden ist und das auch das Gelenk (21) stützt.

## Revendications

1. MOTOCYCLE A TROIS ROUES (10), comprenant une portion avant (11) munie d'un pneu et une portion arrière (12) munie de deux pneus, lesdites portions avant et arrière (11, 12) étant connectées l'une à l'autre par une suspension à bras oscillant (1), ladite suspension comprenant un quadrilatère articulé (2), comprenant à son tour une paire de premières bielles latérales (3) ayant la même longueur, un segment de base inférieur (4) et un segment de base principal (5), la longueur du segment de base inférieur (4) étant inférieure à la longueur du segment de base principal (5); au moins un premier élément élastique (6) agissant sur lesdites premières bielles latérales (3), ledit élément élastique étant adapté pour maintenir, au repos, le quadrilatère articulé (2) dans une configuration dans laquelle lesdits segments de base (4, 5) sont parallèles l'un à l'autre; dans lequel les longueurs géométriques desdites premières bielles latérales (3) et desdits segments de base principal (5) et inférieur (4) sont proportionnées les unes aux autres de manière à assurer que l'axe de symétrie du segment de base principal (5), pour toute position dudit segment de base principal (5) par rapport au segment de base inférieur (4), passe toujours par un point géométrique constant coïncidant avec le centre de rotation latéral (301) du pneu de la portion avant (11) du motocycle (10) par rapport auquel ledit pneu est susceptible de tourner, modifiant ainsi son inclinaison sous l'effet de l'action du conducteur au moment où il doit diriger, ledit motocycle à trois roues (10) **étant caractérisé en ce qu'**il comprend une charnière (21), qui connecte la portion avant (11) dudit motocycle (10) à au moins un élément d'articulation (22), avec lequel le segment de base principal (5) de la suspension à bras oscillant (1) est fixé solidement; dans lequel la liberté de rotation de ladite charnière (21) est réglée par au moins un deuxième élément élastique (23,72).

2. MOTOCYCLE A TROIS ROUES (10), selon la revendication 1, **caractérisé en ce que** ladite paire de premières bielles (3) est adaptée pour être montée à une première de ses extrémités sur un support ancré à la portion arrière (12) dudit motocycle à trois roues (10) par des paires rotatives sur lequel elle peut se déplacer librement de manière oscillante et, à ses autres extrémités, sur un support ancré à la portion avant (11), toujours par des paires rotatives.

3. MOTOCYCLE A TROIS ROUES (10), selon l'une quelconque des revendications précédentes, **caractérisé en ce que** ledit premier élément élastique (6) se compose d'un ressort filaire, pneumatique, hydraulique ou à gaz.

4. MOTOCYCLE A TROIS ROUES (10), selon l'une quelconque des revendications précédentes, **caractérisé en ce que** ladite suspension à bras oscillant (1) comprend une paire desdits premiers éléments élastiques (6), chacun étant adapté pour connecter le cadre dudit motocycle à trois roues (10) à l'une des deux premières bielles (3).

5. MOTOCYCLE A TROIS ROUES (10), selon l'une quelconque des revendications précédentes, **caractérisé en ce que** le deuxième élément élastique (23) est coaxial avec la charnière (21).

6. MOTOCYCLE A TROIS ROUES (10), selon la revendication 5, **caractérisé en ce que** ledit deuxième élément élastique (23) connecte ledit au moins un élément d'articulation (22) au cadre de la portion avant (11) du motocycle à trois roues (10).

7. MOTOCYCLE A TROIS ROUES (10), selon l'une quelconque des revendications 1 à 4, **caractérisé en ce que** ledit deuxième élément élastique (72) est connecté à un mécanisme de déviation (71) capable de permettre une orientation souhaitée dudit deuxième élément élastique (72).

8. MOTOCYCLE A TROIS ROUES (10), selon la revendication 7, dans lequel ledit mécanisme de déviation (71) prend la forme d'une chaîne cinématique qui connecte une première extrémité dudit deuxième élément élastique (72) à l'un entre l'élément d'articulation (22) ou la portion avant (11) du motocycle (10); une deuxième extrémité dudit deuxième élément élastique (72) étant connectée à l'autre entre l'élément d'articulation (22) ou la portion avant (11) du motocycle (10).

9. MOTOCYCLE A TROIS ROUES (10), selon la revendication 8, **caractérisé en ce que** ledit mécanisme de déviation (71) comprend:
au moins un culbuteur (712) comprenant une première extrémité (712a), une deuxième extrémité (712b) articulée sur ledit deuxième élément élastique (72) et un pivot intermédiaire (712c) articulé sur un point d'articulation fixé solidement à la portion avant (11) du motocycle (10);
une deuxième bielle (713) comprenant une première extrémité (713a), articulée sur un élément fixé solidement audit élément d'articulation (22) et une deuxième extrémité (713b), articulée sur la première extrémité (712a) dudit culbuteur (712).

10. MOTOCYCLE À TROIS ROUES (10), selon la revendication 9, dans lequel ledit point d'articulation fixé solidement à la portion avant du motocycle prend la forme d'une barre fixe (73), ladite barre fixe (73) étant supportée par au moins un longeron vertical (74), capable de supporter d'autres éléments structurels du motocycle à trois roues (10).

11. MOTOCYCLE A TROIS ROUES (10), selon l'une des revendications 7 à 10, dans lequel ledit deuxième élément élastique (72) prend la forme d'un cylindre amortisseur.

12. MOTOCYCLE A TROIS ROUES (10), selon l'une des revendications 7 à 11, dans lequel ledit deuxième élément élastique (72) présente un développement prévalent selon une direction orthogonale au sol.

13. MOTOCYCLE A TROIS ROUES (10), selon l'une des revendications 7 à 12, comprenant au moins un élément de jonction (75), solidaire de la portion avant (11) du motocycle, articulé sur ladite deuxième extrémité (72b) dudit deuxième élément élastique (72) et qui supporte aussi ladite charnière (21).
